# EUROPÄISCHE PATENTSCHRIFT

(11) **EP 1 806 221 B1**
(45) Veröffentlichungstag und Bekanntmachung des Hinweises auf die Patenterteilung: **21.11.2012**
(21) Anmeldenummer: 07000353.8
(22) Anmeldetag: 09.01.2007
(51) Int. Cl.: B32B 5/06, D04H 13/00, D06N 7/00, E04F 13/16, E04F 15/10, E04F 13/08, E04F 15/16

(54) **Textiler Boden- und Wandbelag mit einer Faseraggregate enthaltenden Sichtschicht**
Textile floor and wall covering with visible layer containing fibre aggregates
Revêtement de sol et de mur textile doté d'une couche voyante contenant un agrégat en fibres

(30) Priorität: 09.01.2006 DE 102006001093
(43) Veröffentlichungstag der Anmeldung: 11.07.2007
(73) Patentinhaber: Tesch, Günter, 1700 Fribourg (CH)
(72) Erfinder: Tesch, Günter, 1700 Fribourg (CH)
(74) Vertreter: Lesser, Karl-Bolko

(56) Entgegenhaltungen:
- EP-A- 1 564 322
- EP-A1- 0 013 428
- WO-A-93/22487
- WO-A-98/30745
- DE-A1- 4 244 251
- DE-U- 1 923 426

## Beschreibung

Die Erfindung betrifft einen textilen Boden- und Wandbelag mit einer Faseraggregate enthaltenden Sichtschicht, in der die Faseraggregate miteinander und mit einer Trägerschicht vernadelt sind.

### Stand der Technik

Solche Boden- und Wandbeläge sind z. B. aus der EP 0 013 427 A1 und der EP 0 013 428 A1 bekannt. Bei diesen bekannten Boden- und Wandbelägen sind in der Ober- und Sichtschicht kugelförmige Faseraggregate angeordnet, die dem Boden- und Wandbelag nicht nur eine strukturierte Oberfläche verleihen, sondern auch durch verschieden große, farblich zueinander unterschiedliche Faseraggregate eine große Gestaltungsvielfalt eröffnen. Die kugelförmigen Faseraggregate sind miteinander und mit der unter der Sichtschicht angeordneten Trägerschicht vernadelt.

Diese Boden- und Wandbeläge haben sich in der Praxis sehr gut bewährt.

Ein Nachteil dieser bekannten Boden- und Wandbeläge ist jedoch, insbesondere, wenn die freie Oberfläche der Sichtschicht strukturiert ist, dass bei der Benutzung derselben die freie Oberfläche der Sichtschicht verschmutzen kann und als textiler Boden- und Wandbelag meist schwierig und aufwendig zu reinigen und zu entflecken ist, wobei diese Verschmutzungen zumindest bei einigen Nutzungen aus hygienischen Gründen sofort gereinigt werden müssen, z.B. in Krankenhäusern, Altenheimen, Kantinen oder dergleichen.

Insbesondere bei den zuvor genannten Institutionen werden deshalb bisher im Allgemeinen keine textilen Boden- und Wandbeläge eingesetzt, sondern es wird dort in der Regel ein Kunststoff-Boden z.B. ein PVC-Boden oder ein Linoleum-Boden eingesetzt, der sich leicht, insbesondere auch mit desinfizierenden Mitteln nass wischen lässt.

Auch in anderen, viel begangenen Bereichen, wie Läden, Büchereien, Kantinen oder anderen öffentlichen Gebäude gibt es Probleme mit Verschmutzungen bei textilen Boden- und Wandbelägen.

Man hat nun schon seit längerem auch textile Bodenbeläge mit insbesondere transparenten Kunststoff-Folien überzogen, um ein einfacheres Reinigen des Bodenbelages zu gestatten. Dabei wurde insbesondere eine transparente PVC-Folie auf die Sichtseite des Bodenbelages aufgebracht (z. B. DE 1923 426 U), durch die hindurch der Nadelvlies aus gefärbten Fasern sichtbar ist. Die Musterung des Bodenbelages wird bei diesem Bodenbelag durch die Musterung des Nadelvlieses gewährleistet, der auch die elastischen Eigenschaften des Bodenbelages gewährleistet.

Solche Bodenbeläge haben sich am Markt aber nicht durchgesetzt und auch technisch nicht bewährt.

Der Nachteil dieser aufgeprägten PVC-Folie ist nicht nur darin zu sehen, dass PVC aus Umweltgründen heutzutage nach Möglichkeit vermieden wird, sondern insbesondere auch darin, dass nach längerem Gebrauch des Flächengebildes Oberflächenfehler in der PVC-Folie auftreten und sich diese PVC-Folie auch von dem Nadelvlies löst.

### Erfindung

Der Erfindung liegt deshalb die Aufgabe zugrunde einen gattungsgemäßen Boden- und Wandbelag zu schaffen, dessen Sichtschicht im Wesentlichen wasserdicht ist.

Diese Aufgabe wird durch die im Anspruch 1 beschriebene Erfindung gelöst.

Dadurch wird ein textiler Boden- und Wandbelag erhalten, der von der Optik her durch die Faseraggregate besonders schön und interessant gemustert werden kann und die Elastizität eines Teppichbodens aufweist. Der Boden- und Wandbelag ist aber durch die die wasserundurchlässige Masse aufweisende Sichtschicht abwaschbar und abriebfest wie nicht textile Boden- und Wandbeläge.

Durch die erfindungsgemäße Ausbildung erhält man also einen Boden- und Wandbelag, der sowohl fast die Eigenschaften textiler Boden- und Wandbeläge aufweist, als auch die Eigenschaften von Kunststoff-Boden- und Wandbelägen oder sogar besser ist, als letztere.

Die wasserundurchlässige Masse ist im oberen, der Trägerschicht abgewandten Bereich der die Faseraggregate aufweisenden Sichtschicht angeordnet. Dadurch werden nicht nur die Faseraggregate fester in den Boden- und Wandbelag eingebunden, so dass der Boden- und Wandbelag eine noch viel bessere Haltbarkeit aufweist, als die aus den EP 0 013 426 A und der EP 0 013 427 A bekannten Boden- und Wandbeläge, sondern diese können durch von oben auftreffenden Flüssigkeiten und Verschmutzungen nicht durchdrungen werden.

Bei dieser Ausbildung kann z.B. die unebene Oberflächenstruktur der aus den EP 0 013 426 A und der EP 0 013 427 A bekannten Boden- und Wandbeläge erhalten werden.

Für bestimmte Anwendungen empfiehlt es sich den Boden- und Wandbelag so auszubilden, dass die wasserundurchlässige Masse die die Faseraggregate aufweisende Sichtschicht wasserabweisend vollständig überdeckt. So wird ein Eindringen von Flüssigkeiten selbst in der Oberseite der Sichtschicht vermieden.

Gemäß einer besonderen Ausführungsform ist die die Sichtschicht abdeckende wasserundurchlässig machende Masse so auf dieser angeordnet ist, dass sie dem Boden- und Wandbelag eine strukturierte Oberfläche belässt. Die Musterung und Strukturierung der Faseraggregate ist dann optisch und fühlbar noch vorhanden.

Nach einem bevorzugten Merkmal der Erfindung weist die wasserundurchlässige Masse abriebfeste Eigenschaften auf. Durch diese spezielle Masse wird sichergestellt, dass auch bei intensiver Begehung oder Befahrung mit schweren Gegenständen die Oberfläche des Bodenbelages auch über einen längeren Zeitraum nicht wesentlich abgenutzt wird.

Die wasserundurchlässige Masse liegt zum Teil in die Sichtschicht eingedrungen vor. Damit ist sie besser mit dem textilen Teil des Boden- und Wandbelages verbunden und ein Ablösen der Masse wird verhindert.

Ist gemäß einer Ausführungsform der Erfindung die wasserundurchlässige Masse von der Seite der Trägerschicht her dampfdurchlässig, so kann unterhalb der Sichtschicht bzw. des gesamten Belages befindliche Feuchtigkeit, wie z.B. Restdämpfe vom zum Verkleben des Boden- und Wandbelages verwendeten Kleber, entweichen

Gemäß einer bevorzugten Ausführungsform der Erfindung besteht die wasserundurchlässige Masse aus einem Kunststoff-Binder. Dieser kann bei der Produktion pulver- und / oder pastenförmig oder als sogenannter Hotmelt auf bzw. in die Sichtschicht aufgebracht werden.

Besonders geeignet als wasserundurchlässige Masse ist ein Kunststoff Material, welches aus mindestens einem polymeren Kunststoffmaterial besteht.

Die wasserundurchlässige Masse kann dabei aus einem Acrylat, einem Polyurethan, Polyethylen und dessen Derivaten, aus einem anderen Polymer oder aus einem Gemisch derselben bestehen.

Vorzugsweise ist die Trägerschicht ein Gewebe oder ein Faserverbundstoff, wodurch die Festigkeit des Belages in seiner Ebene gegeben ist.

Zweckmäßigerweise weisen die Faseraggregate natürliche oder künstliche textile Fasern oder ein Gemisch daraus auf und sind zumindest passiv nadelfähig. Unter passiv nadelfähig wird dabei verstanden, dass bei einem aus der Nadelvlies-Herstellung bekannten Vernadelungsverfahren diese Fasern bzw. die Faseraggregate von den Vernadelungsnadeln zumindest durchstochen werden können. Aktiv nadelfähige Fasern können beim Vernadelungsverfahren darüber hinaus von den Vernadelungsnadeln für den Vernadelungsprozeß verwendet werden.

Gemäß einer bevorzugten Ausführungsform des Boden- und Wandbelages sind die Faseraggregate aus sphärisch, insbesondere kugelförmig verwickelten Fasern gebildet, wie sie z.B. aus EP 0 013 427 A1 bzw EP 0 013 428 A1 bekannt sind.

Gemäß einer anderen Ausführungsform sind die Faseraggregate zerkleinerte, aus verarbeitetem Teppichmaterial stammende Stücke. Das Teppichmaterial kann z.B. etwa in Würfelform mit einer Kantenlänge von 4 mm geshreddert verwendet werden.

Dabei können die aus verarbeiteteten Teppichmaterial stammenden Stücke aus getufteten, gewebten, geflockten, vernadelten Teppichmaterial stammen, wobei vorzugsweise diese Stücke aus Resten oder fehlerhaften Produktionen stammen.

Insbesondere können die aus verarbeiteteten Teppichmaterial stammenden Stücke neben den Fasern auch die anderen Bestandteile des verarbeiteten Teppichmaterials wie Bindemittel, Schaumpartikel, Garnstückchen, Träger od. dgl. enthalten. Die Stücke sind dann zumindest passiv vernadelfähig.

Weitere Einzelheiten der Erfindung ergeben sich aus den Unteransprüchen und aus einem im Folgenden beschriebenen Ausführungsbeispiels eines Boden- und Wandbelages.

### Ausführungsbeispiel

Auf einer Trägerschicht, die ein passiv nadelfähiges Flächengebilde ist, wie ein Gewebe, ein Faserverbundstoff, ist eine Sichtschicht aus Faseraggregaten angeordnet und mit der Trägerschicht vernadelt. Insoweit ist der Boden- und Wandbelag z.B. aus der EP 0 013 426 A und der EP 0 013 427 A bekannt.

Insbesondere auf der die Faseraggregate enthaltenden Sichtschicht befindet sich eine Masse aus einem Kunststoff-Material, z.B. aus einem Gemisch von Polymeren in einem abgebundenen Zustand, der dem Boden- und Wandbelag eine geschlossene Oberfläche auf der Sichtseite verleiht. Diese Masse kann bei unterschiedlichen Ausführungen des Boden- und Wandbelages unterschiedlich weit in die Sichtschicht hinein dringen.

Wird bei der Herstellung das noch nicht gebundene Kunststoff-Material in Form von Pulver auf den genadelten Belag gegeben und durch Rütteln des Belages dringt das Pulver mehr oder weniger weit in die Sichtschicht ein. Bei den meisten Anwendungen wird so viel Pulver auf die Sichtschicht aufgegeben, dass auch die Oberseite der Faseraggregate nach dem Vernetzen des Kunststoff-Materials noch von der Masse bedeckt ist.

Das Verbinden erfolgt durch Erwärmen bzw. Erhitzen des Boden- und Wandbelages bis zur Bindetemperatur des Kunststoff-Materials, wobei dieses Erwärmen bzw. Erhitzen vor oder gleichzeitig mit einem Kalandern des Boden- und Wandbelages erfolgen kann.

Bei besonderen Ausführungen der Erfindung, bei der eine oben glatte Oberfläche des Boden- und Wandbelages erwünscht ist, wird auf die Sichtschicht eine größere Menge von pulverförmigen Kunststoffmaterial aufgegeben oder es wird auf die Sichtschicht eine Lage von pastösen Kunststoff-Material aufgebracht und heiß kalandert.

Das Verfahren zur Herstellung des erfindungsgemäßen Boden- und Wandbelages ist nicht Gegenstand vorliegender Erfindung und dem Fachmann sind die einzelnen Arbeitsschritte als solches bekannt.

## Patentansprüche

1. Textiler Boden- und Wandbelag mit einer Faseraggregate enthaltenden Sichtschicht, in der die Faseraggregate miteinander und mit einer Trägerschicht vernadelt sind, **dadurch gekennzeichnet,**
**dass** die die Faseraggregate enthaltende Sichtschicht eine optisch ausreichend transparente, wasserundurchlässige Masse aufweist, die im oberen, der Trägerschicht abgewandten Bereich der die Faseraggregate aufweisenden Sichtschicht angeordnet ist und zum Teil in die Sichtschicht eingedrungen vorliegt.

2. Boden- und Wandbelag nach Anspruch 1, **dadurch gekennzeichnet, dass** die wasserundurchlässige Masse die die Faseraggregate aufweisende Sichtschicht wasserabweisend vollständig überdeckt.

3. Boden- und Wandbelag nach Anspruch 2, **dadurch gekennzeichnet, dass** die die Sichtschicht abdeckende wasserundurchlässig machende Masse so auf dieser angeordnet ist, dass sie dem Boden- und Wandbelag eine strukturierte Oberfläche belässt.

4. Boden- und Wandbelag nach einem der vorhergehenden Ansprüche, **dadurch gekennzeichnet, dass** die wasserundurchlässige Masse abriebfeste Eigenschaften aufweist.

5. Boden- und Wandbelag nach einem der vorhergehenden Ansprüche, **dadurch gekennzeichnet, dass** die wasserundurchlässige Masse von der Seite der Trägerschicht her dampfdurchlässig ist.

6. Boden- und Wandbelag nach einem der vorhergehenden Ansprüche, **dadurch gekennzeichnet, dass** die wasserundurchlässige Masse aus einem Kunststoff-Binder besteht.

7. Boden- und Wandbelag nach einem der vorhergehenden Ansprüche, **dadurch gekennzeichnet, dass** die wasserundurchlässige Masse aus mindestens einem polymeren Kunststoff besteht.

8. Boden- und Wandbelag nach einem der vorhergehenden Ansprüche, **dadurch gekennzeichnet, dass** die wasserundurchlässige Masse aus einem Acrylat, einem Polyurethan, Polyethylen und dessen Derivaten, aus einem Ionomer oder aus einem Gemisch derselben besteht.

9. Boden- und Wandbelag nach einem der vorhergehenden Ansprüche, **dadurch gekennzeichnet, dass** die Trägerschicht ein Gewebe oder ein Faserverbundstoff ist.

10. Boden- und Wandbelag nach einem der vorhergehenden Ansprüche, **dadurch gekennzeichnet, dass** die Faseraggregate natürliche oder künstliche textile Fasern oder ein Gemisch daraus aufweisen, die zumindest passiv nadelfähig sind.

11. Boden- und Wandbelag nach einem der vorhergehenden Ansprüche, **dadurch gekennzeichnet, dass** die Faseraggregate aus sphärisch, insbesondere kugelförmig verwickelten Fasern gebildet sind.

12. Boden- und Wandbelag nach Anspruch 10, **dadurch gekennzeichnet, dass** die Faseraggregate zerkleinerte, aus verarbeitetem Teppichmaterial stammende Stücke sind.

13. Boden- und Wandbelag nach Anspruch 12, **dadurch gekennzeichnet, dass** die aus verarbeiteteten Teppichmaterial stammenden Stücke aus getufteten, gewebten, geflockten, vemadelten Teppichmaterial stammen.

14. Boden- und Wandbelag nach Anspruch 12 oder 13, **dadurch gekennzeichnet, dass** die aus verarbeiteteten Teppichmaterial stammenden Stücke aus Resten oder fehlerhaften Produktionen stammen.

15. Boden- und Wandbelag nach Anspruch 12,13 oder 14, **dadurch gekennzeichnet, dass** die aus verarbeiteteten Teppichmaterial stammenden Stücke neben den Fasern auch die anderen Bestandteile des verarbeiteten Teppichmaterials wie Bindemittel, Schaumpartikel, Gamstückchen, Träger od. dgl. enthalten.

## Claims

1. Textile floor and wall covering with a visible layer which comprises fibre aggregates and in which the fibre aggregates are needled with one another and with a backing layer, **characterized in that** the visible layer comprising the fibre aggregates comprises a water-impermeable composition which is optically sufficiently transparent, which is arranged in the upper region, facing away from the backing layer, of the visible layer comprising the fibre aggregates, and has undergone partial penetration into the visible layer.

2. Floor and wall covering according to Claim 1, **characterized in that** the water-impermeable composition fully and water-repellently covers the visible layer comprising the fibre aggregates.

3. Floor and wall covering according to Claim 2, **characterized in that** the water-impermeabilizing composition covering the visible layer is disposed on that layer in such a way that it leaves the floor and wall covering with a structured surface.

4. Floor and wall covering according to any of the preceding claims, **characterized in that** the water-impermeable composition has abrasion resistance properties.

5. Floor and wall covering according to any of the preceding claims, **characterized in that** the water-impermeable composition is vapour-permeable from the side of the backing layer.

6. Floor and wall covering according to any of the preceding claims, **characterized in that** the water-impermeable composition consists of a plastics binder.

7. Floor and wall covering according to any of the preceding claims, **characterized in that** the water-impermeable composition consists of at least one polymeric plastic.

8. Floor and wall covering according to any of the preceding claims, **characterized in that** the water-impermeable composition consists of an acrylate, a polyurethane, polyethylene and its derivatives, an ionomer or a mixture thereof.

9. Floor and wall covering according to any of the preceding claims, **characterized in that** the backing layer is a woven fabric or a fibre composite.

10. Floor and wall covering according to any of the preceding claims, **characterized in that** the fibre aggregates comprise natural or synthetic textile fibres or a mixture thereof which are at least passively needleable.

11. Floor and wall covering according to any of the preceding claims, **characterized in that** the fibre aggregates are formed of spheroidally, more particularly spherically, intermingled fibres.

12. Floor and wall covering according to Claim 10, **characterized in that** the fibre aggregates are comminuted pieces originating from processed carpet material.

13. Floor and wall covering according to Claim 12, **characterized in that** the pieces originating from processed carpet material originate from tufted, woven, flocked and/or needled carpet material.

14. Floor and wall covering according to Claim 12 or 13, **characterized in that** the pieces originating from processed carpet material originate from remnants or defective production batches.

15. Floor and wall covering according to Claim 12, 13 or 14, **characterized in that** the pieces originating from processed carpet material comprise not only the fibres but also the other constituents of the processed carpet material such as binders, foam particles, yarn fragments, backings or the like.

## Revendications

1. Revêtement de sol et de mur textile, doté d'une couche visible contenant des agrégats de fibres, dans lequel les agrégats de fibres sont aiguilletés entre eux et avec une couche de support, **caractérisé en ce que** la couche visible contenant les agrégats de fibres comporte une matière imperméable à l'eau, suffisamment transparente, qui est disposée dans la zone supérieure, opposée à la couche de support, de la couche visible comportant les agrégats de fibres et se trouve en partie insérée dans la couche visible.

2. Revêtement de sol et de mur selon la revendication 1, **caractérisé en ce que** la matière imperméable à l'eau recouvre totalement de façon hydrofuge la couche visible comportant les agrégats de fibres.

3. Revêtement de sol et de mur selon la revendication 2, **caractérisé en ce que** la matière rendant imperméable à l'eau, qui recouvre la couche visible, est disposée sur celle-ci de manière à laisser une surface texturée au revêtement de sol et de mur.

4. Revêtement de sol et de mur selon l'une quelconque des revendications précédentes, **caractérisé en ce que** la matière imperméable à l'eau présente des propriétés de résistance à l'usure.

5. Revêtement de sol et de mur selon l'une quelconque des revendications précédentes, **caractérisé en ce que** du côté de la couche de support la matière imperméable à l'eau est perméable à la vapeur.

6. Revêtement de sol et de mur selon l'une quelconque des revendications précédentes, **caractérisé en ce que** la matière imperméable à l'eau consiste en un liant-matière plastique.

7. Revêtement de sol et de mur selon l'une quelconque des revendications précédentes, **caractérisé en ce que** la matière imperméable à l'eau consiste en au moins une matière plastique polymère.

8. Revêtement de sol et de mur selon l'une quelconque des revendications précédentes, **caractérisé en ce que** la matière imperméable à l'eau consiste en un acrylate, un polyuréthane, un polyéthylène et ses dérivés, en un ionomère ou en un mélange de ceux-ci.

9. Revêtement de sol et de mur selon l'une quelconque des revendications précédentes, **caractérisé en ce que** la couche de support est un tissu ou un composite de fibres.

10. Revêtement de sol et de mur selon l'une quelconque des revendications précédentes, **caractérisé en ce que** les agrégats de fibres comportent des fibres textiles naturelles ou synthétiques ou un mélange de telles fibres, qui peuvent être au moins passivement aiguilletées.

11. Revêtement de sol et de mur selon l'une quelconque des revendications précédentes, **caractérisé en ce que** les agrégats de fibres sont constitués de fibres enchevêtrées en forme de sphère, en particulier en forme de boule.

12. Revêtement de sol et de mur selon la revendication 10, **caractérisé en ce que** les agrégats de fibres sont des pièces fragmentées provenant de matériau de tapis manufacturé.

13. Revêtement de sol et de mur selon la revendication 12, **caractérisé en ce que** les pièces provenant de matériau de tapis manufacturé proviennent de matériau de tapis tufté, tissé, floqué, aiguilleté.

14. Revêtement de sol et de mur selon la revendication 12 ou 13, **caractérisé en ce que** les pièces provenant de matériau de tapis manufacturé proviennent de restes ou de productions défectueuses.

15. Revêtement de sol et de mur selon la revendication 12, 13 ou 14, **caractérisé en ce que** les pièces provenant de matériau de tapis manufacturé contiennent en plus de fibres également les autres composants du matériau de tapis manufacturé, tels que des liants, des particules de mousse, des petits morceaux de fil, des supports ou similaires.
